(19) Europäisches Patentamt
European Patent Office
Office européen des brevets

(11) **EP 2 393 192 B1**

(12) **FASCICULE DE BREVET EUROPEEN**

(45) Date de publication et mention
de la délivrance du brevet:
**13.03.2013 Bulletin 2013/11**

(51) Int Cl.:
*H02M 3/158* (2006.01)      *G05F 1/67* (2006.01)
*H02J 3/38* (2006.01)

(21) Numéro de dépôt: **11168129.2**

(22) Date de dépôt: **30.05.2011**

(54) **Circuit convertisseur et système électronique comportant un tel circuit**

Stromrichter  und elektronisches System mit einem solchen Schaltkreis

Converter circuit and electronic system comprising such a circuit

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.06.2010 FR 1054424**

(43) Date de publication de la demande:
**07.12.2011 Bulletin 2011/49**

(73) Titulaire: **Commissariat à l'Énergie Atomique
et aux Énergies Alternatives
75015 Paris (FR)**

(72) Inventeurs:
• **Waltisperger, Guy
38000 Grenoble (FR)**

• **Willemin, Jérôme
38120 Tullins (FR)**

(74) Mandataire: **Croonenbroek, Thomas Jakob et al
Cabinet Innovincia
11, avenue des Tilleuls
74200 Thonon-les-Bains (FR)**

(56) Documents cités:
**EP-A2- 0 090 212     WO-A1-2007/039091**

• **ASHISH PANDEY ET AL: "A Simple Single-
Sensor MPPT Solution", IEEE TRANSACTIONS
ON POWER ELECTRONICS, IEEE SERVICE
CENTER, PISCATAWAY, NJ, US, vol. 22, no. 2, 1
mars 2007 (2007-03-01), pages 698-700,
XP011172379, ISSN: 0885-8993, DOI: DOI:
10.1109/TPEL.2007.892346**

**Description**

La présente invention concerne un circuit convertisseur et un système électronique comportant un tel circuit.

Le développement des panneaux photovoltaïques a pris un essor très important ces dernières années afin d'utiliser de plus en plus des sources d'énergie renouvelables permettant de réduire l'effet de serre néfaste provoqué en particulier par l'émission du dioxyde de carbone.

Il en est de même des sources d'énergie renouvelables comme les éoliennes ou des sources thermoélectriques.

Ces sources d'énergie ont la particularité que l'énergie électrique fournie par ces sources varie fortement en fonction des phénomènes naturels qui les alimentent. De plus, un générateur photovoltaïque est un générateur dont la caractéristique $I = f(U)$ est fortement non-linéaire. Ainsi, pour un même éclairement, la puissance délivrée sera différente selon la charge.

Ainsi, le rendement, c'est-à-dire la puissance délivrée d'une cellule photovoltaïque dépend non seulement de son exposition au soleil qui varie au cours de la journée, mais aussi par exemple de l'occultement du soleil, par exemple par l'ombre portée par des nuages ou d'autres phénomènes météorologiques.

Or, quand des cellules photovoltaïques sont par exemple connectées à une charge comme un consommateur (par exemple un capteur ou encore une batterie à recharger), il s'avère que la puissance transférée à la charge ne correspond généralement pas à la puissance maximale qui pourrait être délivrée par la cellule. On remarque des problèmes similaires dans le cas du éolien. Il en résulte que le rendement chute non seulement à cause par exemple d'un ensoleillement plus faible, mais ce rendement est en plus grevé par un point de fonctionnement imposé se situant en dessous des performances potentielles de la cellule.

Afin de palier cet inconvénient et pour produire toujours de l'énergie le plus proche du point de fonctionnement optimal, on utilise des circuits mettant en oeuvre une méthode appelé Maximum Power Point Tracking (MPPT) (méthode de recherche de la puissance maximale) qui ont été développés depuis 1968. Il s'agit d'assurer une meilleure connexion entre une source non linéaire et une charge arbitraire.

Ces circuits sont conçus pour forcer le générateur, tel que la cellule photovoltaïque, à travailler à son point de fonctionnement maximum (« Maximum power point » pour point de puissance maximale en anglais) ce qui induit un rendement amélioré.

Un contrôleur MPPT permet donc de piloter le convertisseur statique reliant la charge (une batterie par exemple) et le panneau photovoltaïque de manière à fournir en permanence le maximum de puissance à la charge.

Il est connu de mettre en oeuvre pour la recherche du point maximal de puissance MPP (**MPP, Maximum Power Point** en anglais) une méthode basée sur une méthode perturbation-observation.

Dans le cas d'une application photovoltaïque, il s'agit en fait d'un algorithme qui, pour une tension U1 fixée, va mesurer la puissance correspondante P1 délivrée par le générateur, puis, après un certain temps, l'algorithme impose une tension $U2 = U1 + \Delta U$ et mesure également la puissance correspondante $P2$. Par la suite, on impose une tension U3 = $U2 + \Delta U$, si P2 est supérieure à $P1$ ou U3 = $U2 - \Delta U$ dans le cas contraire.

Toutefois, cela implique des mesures de courant et aussi des moyens de calculs importants dont la consommation énergétique est non négligeable. C'est pourquoi dans une installation photovoltaïque de grande taille, un sous-groupe de cellules est exclusivement dédié à fournir l'énergie nécessaire pour le contrôle du circuit MPPT.

Cependant, dans des microsystèmes électroniques, comme par exemple des capteurs autonomes, cette approche n'est pas acceptable, car les contraintes en termes d'encombrement et de poids sont fortes, et il est nécessaire d'avoir un système le plus petit possible avec une autonomie accrue.

On connaît aussi des circuits de recherche du point de fonctionnement de puissance maximale possédant une cellule pilote supplémentaire, ce qui n'est pas toujours souhaitable.

Il est également connu des circuits MPPT sans cellule pilote qui se basent sur un échantillonnage de la tension en circuit ouvert en déconnectant à fréquence fixe le panneau photovoltaïque avec le reste du circuit pour mesurer la tension en circuit ouvert. Le système reconnecte alors le panneau au circuit de récupération qui a pris en compte les nouveaux paramètres optimisés. Mais il en résulte une interruption fréquente du processus de récupération d'énergie, ce qui n'est pas admissible pour des microsystèmes électroniques à vocation autonome.

Enfin, on connaît d'un article intitulé « A simple single - sensor MPPT solution » paru dans le journal IEEE Transactions on Power Electronics, Vol. 22, N°2, Mars 2007 une méthode de recherche MPPT basée sur des mesures de tensions.

Dans cet article, il est exposé que la dérivée de la tension de fonctionnement de la source d'énergie en fonction du rapport cyclique présente un maximum autour du point maximal de puissance MPP. Il en résulte que la recherche du maximum de cette dérivée de tension équivaut à la recherche du point maximal de puissance.

Ainsi, grâce à de simples mesures de tensions et des opérations de soustractions et de comparaison, on peut faire fonctionner le circuit convertisseur autour de point maximal de puissance MPP.

A cet effet, on fait varier le rapport cyclique $\alpha$ à des intervalles prédéfinis, par exemple à une dizaine de Hz, d'une quantité prédéfinie $\Delta\alpha$, et, on suit la dérivée de la tension, c'est-à-dire l'évolution des différences de tensions intervenant après des changements du rapport cyclique.

Or, dans l'article précité, cette boucle de régulation MPPT est réalisée à l'aide d'un microcontrôleur.

Etant donné la faible quantité d'énergie disponible, on cherche par la présente invention encore à optimiser la dépense d'énergie au niveau de cette boucle de régulation, en particulier pour optimiser davantage la récupération d'énergie tout en permettant une réduction sensible de l'encombrement du système.

A cet effet, la présente invention propose un circuit convertisseur destiné à être relié à une source d'énergie électrique susceptible de fluctuations importantes de puissance délivrée, comprenant

- un circuit de hachage à rapport cyclique variable, susceptible d'être reliée à ladite source d'énergie électrique, et
- au moins un circuit de sortie adapté à être connecté au circuit de hachage,
- une boucle de régulation par recherche du point de fonctionnement du maximum de puissance de ladite source d'énergie électrique reliée à une sortie de ladite source d'énergie variable, et
- une unité de commande configurée pour commander à des intervalles prédéfinis des changements du rapport cyclique du circuit de hachage en fonction d'un signal de consigne de ladite boucle de régulation, dans lequel la boucle de régulation comprend des moyens de stockage analogique d'informations correspondant à des tensions de sortie de ladite source d'énergie électrique pour au moins trois rapports cycliques successifs et une unité analogique de comparaison délivrant, en fonction des informations stockées analogiquement, en sortie un signal de consigne d'augmentation ou de diminution du rapport cyclique par l'unité de commande.

Selon une ou plusieurs caractéristiques du circuit convertisseur, prises seules ou en combinaison :

Selon un aspect, lesdits moyens de stockage analogique d'informations correspondant à des tensions de sortie de ladite source d'énergie électrique pour au moins trois rapports cycliques successifs comprennent une première unité de détermination d'un différentiel de tension pour deux premiers rapports cycliques successifs et une seconde unité de détermination d'un différentiel de tension pour deux seconds rapports cycliques successifs dont au moins un est postérieur aux premiers rapports cycliques successifs.

Selon un autre aspect, chaque unité de détermination d'un différentiel de tension pour deux rapports cycliques successifs comprend au moins une première et une deuxième branches parallèles, chaque branche comportant un condensateur et pouvant être connecté via au moins un commutateur à la sortie de ladite source d'énergie, les deux condensateurs pouvant être connectés en parallèle pour un équilibrage de charge et fournir un différentiel de tension pour deux rapports cycliques successifs.

En alternative lesdits moyens de stockage analogique d'informations correspondant à des tensions de sortie de ladite source d'énergie électrique pour au moins trois rapports cycliques successifs comprennent une première branche comportant un condensateur configuré pour stocker via des commutateurs des tensions de sortie de ladite source d'énergie électrique pour un premier et un troisième rapports cycliques successifs et une seconde branche comportant un condensateur configuré pour stocker via des commutateurs des charges correspondant à la tension de sortie de ladite source d'énergie électrique pour un deuxième rapport cyclique, intercalé entre les premier et troisième rapports cycliques, chaque branche étant connectée à une entrée correspondante de ladite unité analogique de comparaison, le poids de la seconde branche étant double par rapport à la première branche.

Puis, on prévoit selon une première variante que la première branche est connectée à ladite source d'énergie via un pont diviseur.

Selon une seconde variante, c'est la deuxième branche qui comporte un circuit commuté pour doubler la charge du condensateur pour le deuxième rapport cyclique.

Selon un aspect plus global, ladite unité analogique de comparaison est un amplificateur opérationnel configuré en tant que comparateur.

La boucle de régulation est par exemple configurée pour déterminer les tensions à la sortie de ladite source d'énergie après un délai de stabilisation prédéfinie suite à un changement du rapport cyclique.

Selon un autre aspect, l'unité de commande comprend en outre des moyens pour commander un changement du rapport cyclique d'une quantité prédéfinie en fonction du signal de consigne de ladite boucle de régulation.

Selon encore un autre aspect, l'unité de commande est configurée pour commander une augmentation du rapport cyclique d'une quantité prédéfinie si le signal de consigne a une polarité positive.

On prévoit en outre que l'unité de commande soit par exemple configurée pour commander une augmentation du rapport cyclique d'une quantité prédéfinie si le signal de consigne a une polarité négative.

Enfin, selon un autre aspect, l'unité de commande comporte uniquement des blocs logiques.

L'invention a également pour objet un système électronique comprenant au moins une source d'énergie électrique susceptible de fluctuations importantes et au moins un circuit convertisseur tel que défini ci-dessus relié à ladite au moins une source d'énergie.

Selon un aspect, ladite source comprend au moins un élément du groupe suivant formé par une cellule photovoltaïque, une éolienne, un élément thermoélectrique.

D'autres avantages et caractéristiques apparaîtront à la lecture de la description de l'invention, ainsi que des figures suivantes sur lesquelles :

- la figure 1 présente un schéma d'un système électronique comprenant un circuit convertisseur de l'invention,
- la figure 2 présente un détail du circuit convertisseur de la figure 1 selon un premier mode de réalisation,
- la figure 3 présente une réalisation particulière du détail de la figure 2,
- la figure 4 présente un chronogramme de commutation des commutateurs de la figure 3,
- la figure 5 présente un détail du circuit convertisseur de la figure 1 selon un deuxième mode de réalisation,
- la figure 6 présente une réalisation particulière du détail de la figure 5 selon une première variante,
- la figure 7 présente un chronogramme de commutation des commutateurs de la figure 6,
- la figure 8 présente une réalisation particulière du détail de la figure 5 selon une seconde variante,

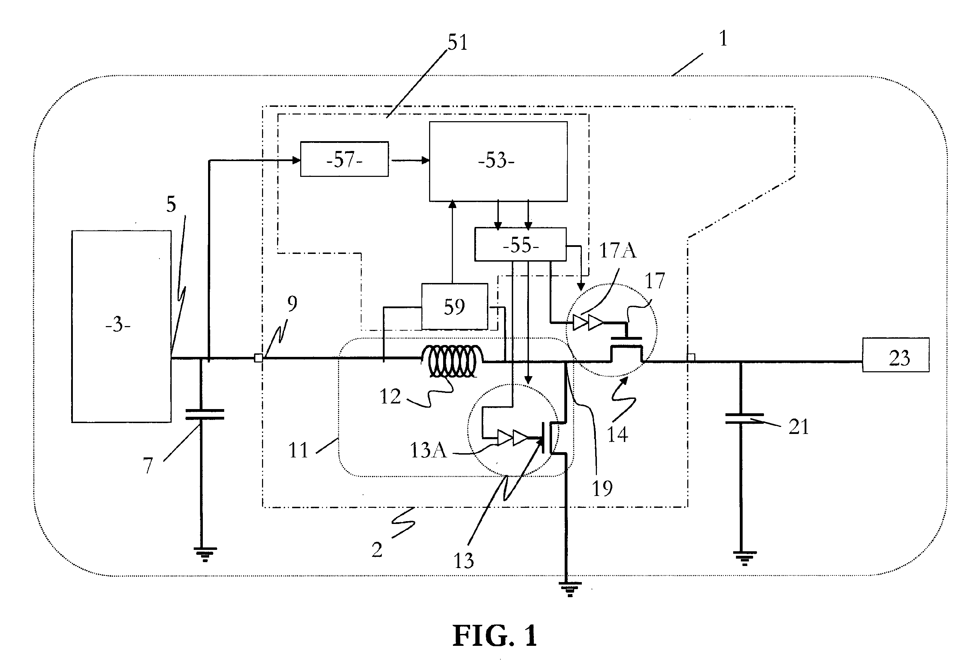

La figure 1 présente un exemple de réalisation d'un schéma d'un système électronique 1 comprenant un circuit convertisseur 2 et une source d'énergie électrique 3, reliée au circuit convertisseur 2.

En ce qui concerne la source d'énergie électrique 3 susceptible de fluctuations importantes de la puissance délivrée, il s'agit par exemple d'une cellule ou d'un panneau solaire, d'un élément thermoélectrique ou encore d'une éolienne, en particulier de petite taille.

Par fluctuations importantes, on entend des fluctuations d'environ un facteur cent entre la puissance la plus faible et la puissance la plus forte pouvant être délivrée par une telle source 3.

Une sortie 5 de cette source 3 est raccordée via un filtre passe-bas 7, réalisé par un condensateur, à une borne d'entrée 9 du circuit convertisseur 2.

Le circuit convertisseur 2 comprend un circuit de hachage 11 à rapport cyclique $\alpha$ variable, dont la borne d'entrée forme la borne d'entrée 9 du circuit convertisseur 2 reliée à ladite source d'énergie électrique 3.

Le circuit de hachage 11 comprend d'une part une inductance d'accumulation d'énergie électrique 12 et au moins un commutateur de hachage 13.

Sur la figure 1, l'inductance d'accumulation d'énergie électrique 12 et le commutateur de hachage 13 sont disposés selon une configuration élévateur de tension (également appelé « configuration boost »), c'est-à-dire que l'entrée de l'inductance est reliée à la source 3 et la sortie de l'inductance 12 peut être reliée à la masse si le commutateur 13 est à l'état passant pour permettre l'établissement d'un champ magnétique autour de l'inductance 12. La fréquence de hachage est par exemple de 200kHz.

Selon une variante non représentée, l'inductance d'accumulation d'énergie électrique 12 et le commutateur de hachage 13 peuvent également être disposés selon une configuration abaisseur de tension Le circuit convertisseur comprend de plus un circuit de sortie 14.

En amont, ce circuit de sortie 14 est connecté via un commutateur 17 à une borne de sortie 19 du circuit de hachage 11.

En aval, ce circuit de sortie 14 est raccordé via un filtre passe-bas 21 à une charge électrique 23 appartenant au système électronique 1.

Le pilotage du circuit convertisseur 2 est assuré par un circuit de commande 51.

Ce circuit de commande 51 présente une unité de commande 53 commandant d'une part le rapport cyclique $\alpha$ du circuit de hachage 11 et donc de son commutateur 13 et d'autre part la commutation du commutateur 17.

A cet effet, l'unité de commande 53 comprend une sortie PWM (pour « pulse width modulation », c'est-à-dire modulation de largeur d'impulsion pulse en anglais) commandant un générateur 55 de commande des commutateurs 13 et 17 (également appelé unité DTLC pour « dead time logic control » à savoir commande logique de temps mort en anglais).

Concernant le commutateur 13, il est à noter qu'il s'agit d'un transistor du type NMOS dont la base est reliée via des buffers (également appelé des lignes de retard) 13A à la sortie du générateur 55.

Pour le commutateur 17, il s'agit d'un transistor PMOS dont la base est reliée via des buffers 17A à des sorties associées du générateur 55.

Le circuit de commande 51 comprend de plus une boucle 57 de régulation par recherche du point de fonctionnement du maximum de puissance (boucle de régulation MPPT ; MPPT signifiant « Maximum Power Point Tracking » en anglais) de ladite source d'énergie électrique 3 reliée à une sortie 5 de ladite source d'énergie variable 3.

Une sortie de la boucle 57 de régulation est connectée à une entrée de l'unité de commande 53. Cette dernière est configurée pour commander à des intervalles prédéfinis des changements du rapport cyclique $\alpha$ du circuit de hachage 11 en fonction d'un signal de consigne de ladite boucle 57 de régulation, comme cela va être détaillé ci-après.

Etant donné que la boucle de régulation 5 7 délivre directement un signal de consigne pour augmenter ou diminuer le rapport cyclique $\alpha$, l'unité de commande 53 peut être réalisée par de simples blocs logiques de sorte que le circuit convertisseur 2 ne comporte plus de microprocesseur ce qui constitue un gain important en coût, en termes de consommation énergétique et en termes d'encombrement.

Pour la commande en particulier du commutateur 17, le circuit de commande 51 comprend un capteur 59 de courant « zéro » pour déterminer l'annulation du courant à travers l'inductance d'accumulation 12, ce capteur 59 délivrant un signal à une entrée correspondante de l'unité de commande 53.

Selon une variante non représentée, on peut envisager de remplacer le capteur de courant « zéro » par une diode à très faible seuil de tension en parallèle avec un commutateur.

Pour le fonctionnement, l'unité de commande 53 commande le générateur 5 5 de façon que

- quand le commutateur 13 est fermé (état passant), le commutateur 17 est ouvert (étant bloquant),
- quand le commutateur 17 est fermé (état passant), le commutateur 13 est ouvert (état bloquant).

Ainsi, à un moment donné, seul un des commutateurs 13 ou 17 peut être à l'état ouvert.

Le circuit de commande peut être configuré pour commander le circuit de hachage 11 selon un fonctionnement discontinu, c'est-à-dire que le courant s'annule périodiquement dans l'inductance 12.

On décrira maintenant plus en détail la boucle de régulation 57.

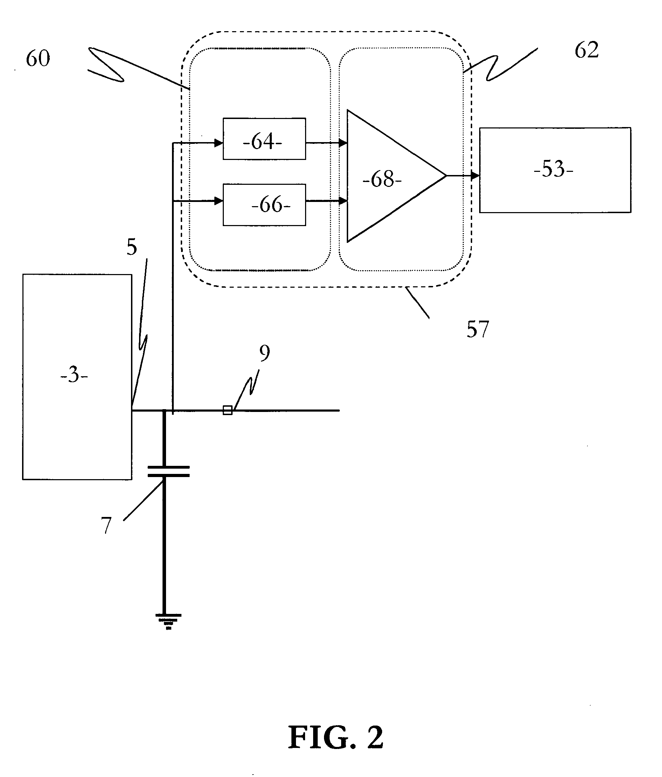

La figure 2 montre un détail de la figure 1.

En effet, la boucle 57 de régulation comprend des moyens 60 de stockage analogique d'informations correspondant à des tensions de sortie de ladite source d'énergie électrique 3 pour au moins trois rapports cycliques successifs $(\alpha_{i-1}, \alpha_i, \alpha_{i+1})$ et une unité 62 analogique de comparaison délivrant, en fonction des informations stockées analogiquement, en sortie un signal de consigne d'augmentation ou de diminution du rapport cyclique par l'unité de commande 53.

Plus en détail, lesdits moyens 60 de stockage analogique d'informations comprennent une première unité 64 de détermination d'un différentiel de tension pour deux premiers rapports cycliques successifs $(\alpha_{i-1}, \alpha_i)$ et une seconde unité 66 de détermination d'un différentiel de tension pour deux seconds rapports cycliques successifs $(\alpha_i, \alpha_{i+1})$. Par simplicité, on choisira que les deux unités 64 et 66 sont réalisées de façon identiques.

Cependant, la première unité 64 est configurée pour déterminer un premier différentiel de tension pour deux premiers rapports cycliques successifs $(\alpha_{i-1}, \alpha_i)$. Ainsi, la première unité 64 détermine

$$\Delta V^i_S = |V_S(\alpha_i) - V_S(\alpha_{i-1})|$$

Tandis que la seconde unité 66 est configurée pour déterminer un second différentiel de tension pour deux seconds rapports cycliques successifs $\alpha_i, \alpha_{i+1}$, dont au moins un $(\alpha_{i+1})$ est postérieur aux premiers rapports cycliques successifs $(\alpha_{i-1}, \alpha_i)$.

Ainsi, la seconde unité 66 détermine :

$$\Delta V^{i+1}_S = |V_S(\alpha_{i+1}) - V_S(\alpha_i)|$$

Les sorties des deux unités 64 et 66 sont connectées à des entrées correspondantes de l'unité 62 analogique de comparaison. Cette unité 62 est par exemple un amplificateur opérationnel 68 configuré en tant que comparateur. Celui-ci est par exemple un comparateur à verrouillage (« latched comparator » en anglais) permettant de limiter davantage la consommation électrique.

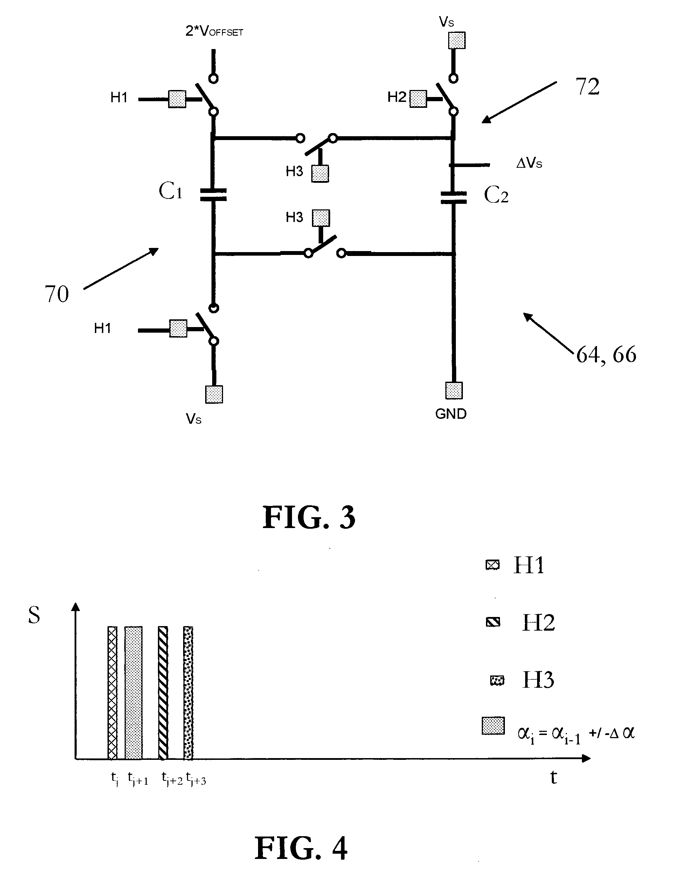

La figure 3 montre un exemple de réalisation d'une unité 64 ou 66.

Le principe général du circuit de la figure 3 consiste dans le fait que l'on peut stocker pour un instant donné une première quantité de charges correspondant à une première tension de sortie $V_S$ de la source d'énergie 3 dans un premier condensateur C1, puis, après changement de rapport cyclique $\alpha$, on stocke pour un instant donné une deuxième quantité de charges correspondant à une deuxième tension de sortie $V_S$ de la source d'énergie 3 dans un deuxième condensateur C2, puis, on connecte ces condensateurs C1 et C2 en parallèle pour opérer un équilibrage des charges stockées dans les deux condensateurs C1 et C2, qui est représentatif de la différence entre les deux tensions pris pour deux rapports cycliques différents.

Bien entendu après chaque changement du rapport cyclique, on attend un délai de stabilisation prédéfini avant de prélever ces charges.

Plus en détail, l'unité 64 ou 66 représentée sur la figure 3 comprend au moins une première 70 et une deuxième 72 branches parallèles.

Chaque branche 70, 72 comporte respectivement un condensateur C1 ou C2, de même valeur.

Le condensateur C1 peut être relié via deux commutateurs H1, lorsqu'ils sont commutés à l'état passant, d'une part à la sortie $V_S$ de la source d'énergie 3 et d'autre part à une tension d'offset $V_{OFFSET}$.

Le condensateur C2 peut être relié via un commutateur H2, lorsqu'il est commuté à l'état passant, d'une part à la sortie $V_S$ de la source d'énergie 3 et d'autre part à la masse GND.

Puis, les deux branches 70 et 72 peuvent être interconnectées entre elles en parallèle par deux commutateurs H3 lorsqu'ils sont commutés à l'état passant.

Il est à noter que si la tension $V_S$ est appliquée à une borne du condensateur $C_1$, elle sera ensuite, après changement du rapport cyclique appliquée à la borne opposée de $C_2$, de sorte qu'un équilibrage des charge puisse se réaliser pour faire apparaître une tension $\Delta V_S$ en sortie de l'unité 64 ou 66.

En effet, en supposant C1=C2=C et si on prend en plus en compte la figure 4 montrant un chronogramme de commandes des commutateurs H1, H2 et H3 ainsi que le changement du rapport cyclique de $\alpha_{i+1} = \alpha_i +/- \Delta\alpha$ ; ($\Delta\alpha>0$) ; à l'instant $t_i$, les commutateurs H1 sont commutés à l'état passant et une charge $Q_i = C (2*V_{offset} - V^i_S)$ est stockée dans C1, puis il y a un changement de rapport cyclique à l'instant $t_{j+1}$.

Après un délai de stabilisation, on ferme le commutateur H2 à l'instant $t_{j+2}$ et une charge $Q_{i+1} = C (V^{i+1}_S)$ est stockée dans C2.

Enfin, à l'instant $t_{j+3}$; on ferme les commutateurs H3, ce qui a pour conséquence un équilibrage des charges de sorte que l'on a en sortie la valeur $\Delta V_S = (Q_i + Q_{i+1}) /2C = V_{offset} + (V^{i+1}_S - V^i_S)/2$.

On vient de décrire un cycle de détermination d'un premier différentiel de tension pour deux premiers rapports cycliques successifs ($\alpha_i$, $\alpha_{i+1}$ ), par exemple opéré par l'unité 64.

L'unité 66 fonctionne de la même façon et la commutation de ses commutateurs H1 peut déjà intervenir pour le même rapport cyclique $\alpha_{i+1}$ quand l'unité 64 a fermé ses commutateurs H2 et ou H3.

Bien entendu, comme le cycle de rafraîchissement du rapport cyclique est beaucoup plus lent (environ d'une dizaine de Hz) que le cycle de hachage (environ d'une centaine de HZ), on utilise pour la commande des commutateurs H1, H2 et H3, avec des diviseurs adaptés, le générateur d'horloge commandant le circuit de hachage 11.

Les sorties des unités 64 et 66 sont connectés à des entrées correspondantes du comparateur 68 dont le signal de sortie correspond au signe de la différence $\Delta V^{i+1}_S$ et $\Delta V^i_S$.

Pour ajuster le rapport cyclique $\alpha$, c'est la seule information nécessaire pour l'unité de commande 53 pour augmenter ou pour diminuer le rapport cyclique $\alpha_{i+2}$ d'une quantité prédéfinie $\Delta\alpha$ ($\Delta\alpha>0$), c'est-à-dire,

$$\text{si } (\Delta V^{i+1}_S - \Delta V^i_S) > 0, \text{ alors } \alpha_{i+2} = \alpha_{i+1} + \Delta\alpha \; ; \; \Delta\alpha>0$$

$$\text{si } (\Delta V^{i+1}_S - \Delta V^i_S) < 0, \text{ alors } \alpha_{i+2} = \alpha_{i+1} - \Delta\alpha \; ; \; \Delta\alpha>0$$

On constate donc que par des circuits entièrement analogiques et peu consommateur d'énergie, on peut obtenir une boucle de régulation efficace MPPT et se passer d'un microcontrôleur.

Ainsi, le circuit convertisseur 2 oscille autour du point de fonctionnement maximal MPP, ce qui garantit de récupérer un maximum de puissance disponible à la source.

On constate en outre que plus $\Delta\alpha$ est petit, plus le circuit peut fonctionner proche du point optimal maximum de puissance. Dans ce cas, on choisira une fréquence de rafraîchissement plus élevée pour permettre une adaptation plus rapide du rapport cyclique en cas de changement des conditions de fonctionnement.

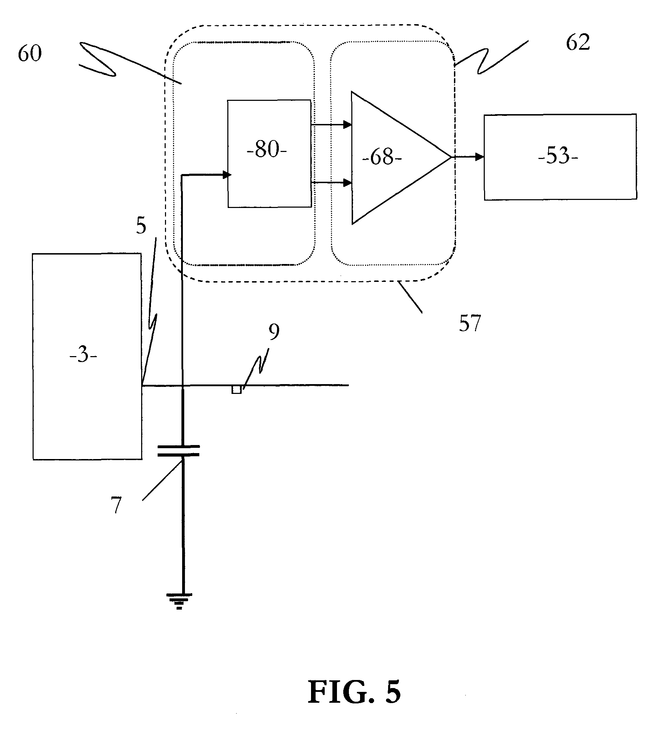

On se réfère maintenant à la figure 5 qui présente un détail du circuit convertisseur de la figure 1 selon un deuxième mode de réalisation.

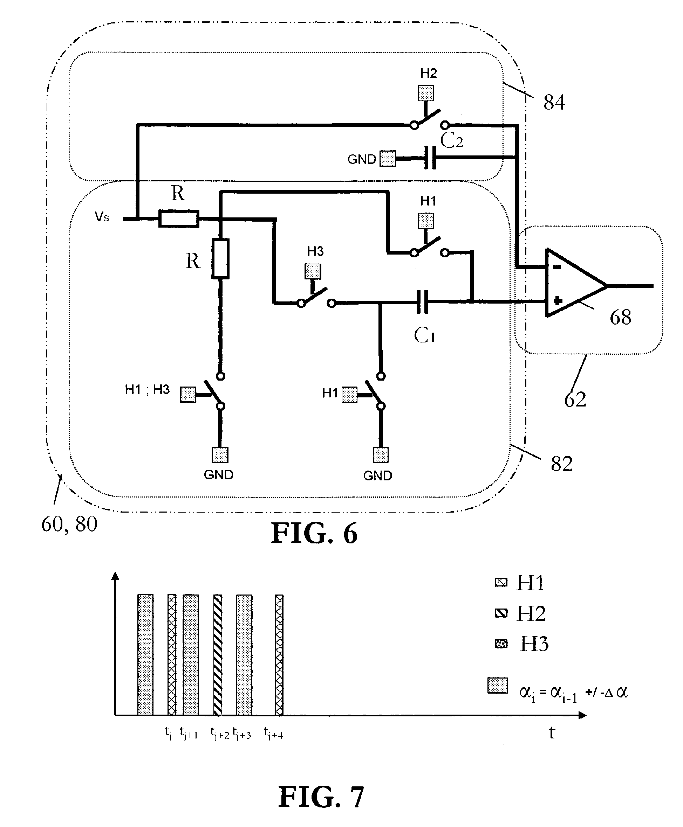

Selon ce mode les moyens 60 sont réalisés par une seule unité 80 dont un exemple de réalisation est représenté sur la figure 6.

Le principe général du circuit des figures 5 et 6 part du constat que l'on peut mesurer la tension $V^{j-1}_S$, $V^j_S$, $V^{j+1}_S$ pour respectivement trois rapport cycliques successifs $\alpha_{i-1}$ ; $\alpha_i$ et $\alpha_{i+1}$.

Pour changer le rapport cyclique, on a seulement besoin du signe de l'évolution du différentiel de tension entre respectivement trois rapports cyclique, à savoir

$$\text{sign } (\delta V_S) = \text{sign } (\Delta V^i_S - \Delta V^{i-1}_S) = \text{sign } ((V^{j+1}_S - V^j_S) - (V^j_S - V^{j-1}_S))$$
$$= \text{sign } (V^{j+1}_S + V^{j-1}_S - 2 V^j_S)$$

Ceci est réalisé par le circuit de la figure 6.

En effet, lesdits moyens 60 de stockage analogique d'informations correspondant à des tensions de sortie de ladite source d'énergie électrique pour au moins trois rapports cycliques successifs ($\alpha_{i-1}$, $\alpha_i$, $\alpha_{i+1}$) comprennent une première branche 82 comportant un condensateur configuré pour stocker via des commutateurs des tensions de sortie de ladite source d'énergie électrique pour un premier et un troisième rapports cycliques successifs ($\alpha_{i-1}$, $\alpha_{i+1}$) et une seconde branche 84 comportant un condensateur configuré pour stocker via des commutateurs des charges correspondant à la tension de sortie de ladite source d'énergie électrique pour un deuxième rapport cyclique ($\alpha_i$), intercalé entre les premier et troisième rapports cycliques ($\alpha_{i-1}$, $\alpha_{i+1}$).

Chaque branche est connectée à une entrée correspondante de ladite unité 62 analogique de comparaison, le poids de la seconde branche 84 étant double par rapport à la première branche 82.

A cet effet, la première branche 82 est par exemple connectée à la source d'énergie 3 via un pont diviseur, par exemple formé de deux résistances R de même valeur, pour diviser la tension $V_S$ par deux.

Chaque branche 82, 84 comprend respectivement un condensateur C1, C2, de même valeur,

Le condensateur C1 peut être relié via deux commutateurs H1 ou deux commutateurs H3 (dont un est commun avec H1), lorsqu'ils sont commutés à l'état passant, d'une part à la sortie $V_S$ de la source d'énergie 3 et d'autre part à la masse.

Il est à noter que lorsque l'on commute les commutateurs H1, la tension $V_S$ est présentée à une première borne du condensateur C1 alors que lorsque l'on commute H3, la tension $V_S$ est présentée à la borne opposée du même condensateur C1, de façon qu'après commutation de H1 d'une part et la commutation de H3 d'autre part, la somme des tensions $V_S$ prises à des moments différents se trouve à l'entrée du comparateur 68.

Le condensateur C2 peut être relié via un commutateur H2, lorsqu'il est commuté à l'état passant, d'une part à la sortie $V_S$ de la source d'énergie 3 et d'autre part à la masse GND.

Pour le fonctionnement, en supposant C1=C2=C et si on prend en plus en compte la figure 7 montrant un chronogramme de commandes des commutateurs H1, H2 et H3 ainsi que le changement du rapport cyclique de $\alpha_{i+1} = \alpha_i +/- \Delta\alpha$ ; ($\Delta\alpha$>0) ; à l'instant $t_j$ les commutateurs H1 sont commutés à l'état passant et une charge $Q_{i-1} = C(V^{i-1}_S)$ est stockée dans C1, puis il y a un changement de rapport cyclique à l'instant $t_{j+1}$.

Après un délai de stabilisation, on ferme le commutateur H2 à l'instant $t_{j+2}$ et une charge $Q_i = C(V^i_S)$ est stockée dans C2.

Enfin, après un nouveau délai de stabilisation, on ferme à l'instant $t_{j+3}$ les commutateurs H3, ce qui a pour conséquence qu'à l'entrée du comparateur 68 pour la branche 82, on a maintenait une tension $(V^{i+1}_S + V^{i-1}_S) / 2$ et à l'entrée pour la branche 84, on a une tension $V^i_S$.

Le comparateur 68 étant verrouillé (« latched » en anglais), le signal de commutation pour les commutateurs H3 peut être utilisé pour valider la sortie du comparateur 68.

Ainsi, à la sortie du comparateur 68, on obtient un signal de sortie correspondant au signe de la différence $\Delta V^{i+1}_S$ et $\Delta V^i_S$.

L'ajustement du rapport cyclique $\alpha$ se fait ensuite de la même manière que décrit ci-dessus pour le premier mode de réalisation.

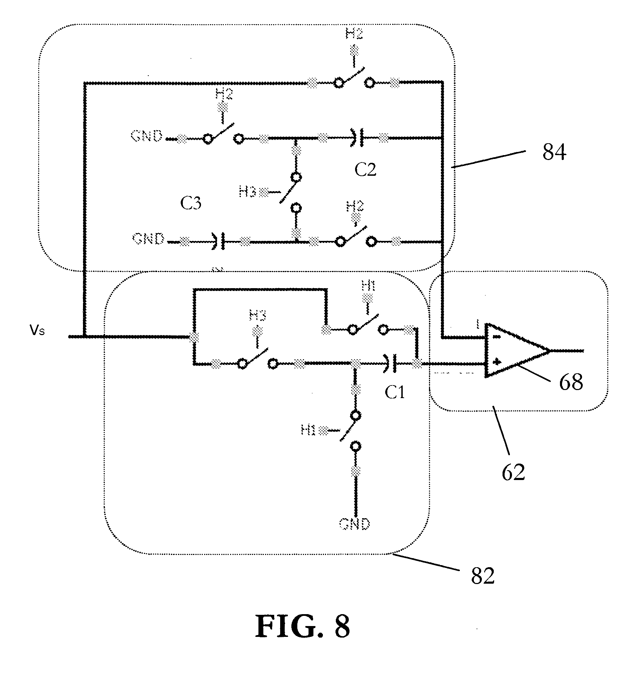

La figure 8 montre une variante de ce mode de réalisation qui diffère de celui de la figure 6 par le fait que la deuxième branche 84 comporte un circuit commuté pour doubler la charge du condensateur pour le deuxième rapport cyclique ($\alpha_i$). Cette variante fonctionne avec le même chronogramme que celui de la figure 7.

Plus en détail, la branche 82 est directement connecté à la source d'énergie électrique ($V_S$) tandis que la branche 84 comporte un condensateur C3 en plus ainsi que des commutateurs H3.

Pour le fonctionnement de la seconde branche 84, la fermeture des commutateurs H2 permet de charger les condensateurs C2 et C3, puis la fermeture du commutateur H3 dans cette branche 84 a pour conséquence qu'une tension $2*V^i$ est à l'entrée du comparateur 68, alors qu'à l'autre entrée, on a une tension $(V^{i+1}_S + V^{i-1}_S)$.

On comprend bien que l'on peut avoir des variantes différentes sans sortir du cadre de la présente invention.

Ainsi, on peut choisir que les condensateurs C1, C2, C3 n'ont pas les mêmes valeurs. On peut aussi adapter ou ajouter des tensions de polarisations afin de mieux prendre en compte les caractéristiques de réponse et/ou d'entrée du comparateur 68.

Le comparateur peut aussi être un comparateur continu, alors que le comparateur verrouillé (« latched » en anglais) ne fonctionne que lors du renouvellement des valeurs échantillonnées, ceci permet de réduire la consommation du bloc lorsque ces échantillonnages sont distants (effectués à une faible fréquence).

Dans les architectures et circuits représentés, on peut très bien remplacer les blocs doubleur et diviseur par des systèmes classiques doubleur de tension (pompe de charges...) ou des architectures connues utilisant des amplificateurs opérationnels.

On comprend donc que le circuit convertisseur selon l'invention dispose d'une boucle de régulation MPPT efficace, peu couteuse et peu consommatrice en énergie, ce qui favorise son utilisation, notamment pour des systèmes électriques de petite taille.

**Revendications**

1. Circuit convertisseur (2) destiné à être relié à une source d'énergie électrique (3) susceptible de fluctuations importantes de puissance délivrée, comprenant :

   - un circuit de hachage (11) à rapport cyclique ($\alpha$) variable,
   susceptible d'être reliée à ladite source d'énergie électrique (3), et
   - au moins un circuit de sortie (14) adapté à être connecté au circuit de hachage (11),
   - une boucle (57) de régulation par recherche du point de fonctionnement du maximum de puissance de ladite source d'énergie électrique reliée à une sortie de ladite source d'énergie variable, et
   - une unité de commande (53) configurée pour commander à des intervalles prédéfinis des changements du rapport cyclique ($\alpha$) du circuit de hachage (11) en fonction d'un signal de consigne de ladite boucle (5 7) de régulation, caractérisé en que
   la boucle (57) de régulation comprend des moyens (60) de stockage analogique d'informations correspondant à des tensions de sortie de ladite source d'énergie électrique (3) pour au moins trois rapports cycliques successifs ($\alpha_{i-1}$, $\alpha_i$, $\alpha_{i+1}$) et une unité (62) analogique de comparaison délivrant, en fonction des informations stockées analogiquement, en sortie un signal de consigne d'augmentation ou de diminution du rapport cyclique par l'unité de commande (53).

2. Circuit convertisseur (2) selon la revendication 1, dans lequel lesdits moyens (60) de stockage analogique d'informations correspondant à des tensions de sortie de ladite source d'énergie électrique pour au moins trois rapports cycliques successifs ($\alpha_{i-1}$, $\alpha_i$, $\alpha_{i+1}$) comprennent une première unité (64) de détermination d'un différentiel de tension pour deux premiers rapports cycliques successifs ($\alpha_{i-1}$, $\alpha_i$) et une seconde unité (66) de détermination d'un différentiel de tension pour deux seconds rapports cycliques successifs ($\alpha_i$, $\alpha_{i+1}$) dont au moins un ($\alpha_{i+1}$) est postérieur aux premiers rapports cycliques successifs ($\alpha_{i-1}$, $\alpha_i$).

3. Circuit convertisseur (2) selon la revendication 2, dans lequel chaque unité de détermination d'un différentiel de tension pour deux rapports cycliques successifs ($\alpha_i$, $\alpha_{i+1}$) comprend au moins une première (70) et une deuxième (72) branches parallèles, chaque branche comportant un condensateur (C1, C2) et pouvant être connecté via au moins un commutateur à la sortie de ladite source d'énergie, les deux condensateurs (C1, C2) pouvant être connectés en parallèle pour un équilibrage de charge et fournir un différentiel de tension pour deux rapports cycliques successifs ($\alpha_i$, $\alpha_{i+1}$).

4. Circuit convertisseur selon la revendication 1, dans lequel lesdits moyens (60) de stockage analogique d'informations correspondant à des tensions de sortie de ladite source d'énergie électrique pour au moins trois rapports cycliques successifs ($\alpha_{i-1}$, $\alpha_i$, $\alpha_{i+1}$) comprennent une première branche (82) comportant un condensateur (C1) configuré pour stocker via des commutateurs des tensions de sortie de ladite source d'énergie électrique pour un premier et un troisième rapports cycliques successifs ($\alpha_{i-1}$, $\alpha_{i+1}$) et une seconde branche (84) comportant un condensateur (C2) configuré pour stocker via des commutateurs des charges correspondant à la tension de sortie de ladite source d'énergie électrique pour un deuxième rapport cyclique ($\alpha_i$), intercalé entre les premier et troisième rapports cycliques ($\alpha_{i-1}$, $\alpha_{i+1}$), chaque branche (82, 84) étant connectée à une entrée correspondante de ladite unité analogique de comparaison, le poids de la seconde branche (84) étant double par rapport à la première branche.

5. Circuit convertisseur selon la revendication 4, dans lequel la première branche (82) est connectée à ladite source d'énergie via un pont diviseur.

6. Circuit convertisseur selon la revendication 4, dans lequel la deuxième branche (84) comporte un circuit commuté pour doubler la charge du condensateur pour le deuxième rapport cyclique ($\alpha_i$).

7. Circuit convertisseur selon l'une quelconque des revendications 1 à 6, dans lequel ladite unité (62) analogique de comparaison est un amplificateur opérationnel (68) configuré en tant que comparateur.

8. Circuit convertisseur selon l'une quelconque des revendications 1 à 7, dans lequel la boucle (57) de régulation est configurée pour déterminer les tensions à la sortie de ladite source d'énergie après un délai de stabilisation prédéfinie suite à un changement du rapport cyclique.

9. Circuit convertisseur selon l'une quelconque des revendications 1 à 18, dans lequel l'unité de commande (53) comprend en outre des moyens pour commander un changement du rapport cyclique ($\alpha$) d'une quantité prédéfinie

($\Delta\alpha$) en fonction du signal de consigne de ladite boucle de régulation.

**10.** Circuit convertisseur selon la revendication 9, dans lequel l'unité de commande (53) est configurée pour commander une augmentation du rapport cyclique ($\alpha$) d'une quantité prédéfinie ($\Delta\alpha$) si le signal de consigne a une polarité positive.

**11.** Circuit convertisseur selon la revendication 9, dans lequel l'unité de commande (53) est configurée pour commander une augmentation du rapport cyclique ($\alpha$) d'une quantité prédéfinie ($\Delta\alpha$) si le signal de consigne a une polarité négative.

**12.** Circuit convertisseur selon l'une quelconque des revendications 1 à 11, dans lequel l'unité de commande (53) comporte uniquement des blocs logiques.

**13.** Système électronique (1) comprenant au moins une source d'énergie électrique (3) susceptible de fluctuations importantes et au moins un circuit convertisseur (2) selon l'une quelconque des revendications 1 à 12 relié à ladite au moins une source d'énergie (3).

**14.** Système électronique selon la revendication 13, dans lequel ladite source (3) comprend au moins un élément du groupe formé par une cellule photovoltaïque, une éolienne, un élément thermoélectrique.

## Claims

**1.** Converter circuit (2) intended to be linked to a source of electrical energy (3) susceptible to significant delivered power fluctuations, comprising:

- a chopping circuit (11) with variable duty cycle ($\alpha$), which can be linked to said source of electrical energy (3), and
- at least one output circuit (14) suitable for connection to the chopping circuit (11),
- a regulation loop (57) based on searching for the maximum power operating point of said electrical energy source linked to an output of said variable energy source, and
- a control unit (53) configured to control, at predefined intervals, changes of the duty cycle ($\alpha$) of the chopping circuit (11) according to a setpoint signal of said regulation loop (57), **characterized in that** the regulation loop (57) comprises analogue storage means (60) for storing information corresponding to output voltages of said electrical energy source (3) for at least three successive duty cycles ($\alpha_{i-1}$, $\alpha_i$, $\alpha_{i+1}$) and an analogue comparison unit (62) delivering, according to the information stored in an analogue manner, as output, a setpoint signal to increase or reduce the duty cycle by the control unit (53).

**2.** Converter circuit (2) according to Claim 1, in which said analogue storage means (60) for storing information corresponding to output voltages of said electrical energy source for at least three successive duty cycles ($\alpha_{i-1}$, $\alpha_i$, $\alpha_{i+1}$) comprise a first unit (64) for determining a voltage differential for two first successive duty cycles ($\alpha_{i-1}$, $\alpha_i$) and a second unit (66) for determining a voltage differential for two second successive duty cycles ($\alpha_i$, $\alpha_{i+1}$) of which at least one ($\alpha_{i+1}$) is later than the first successive duty cycles ($\alpha_{i-1}$, $\alpha_i$).

**3.** Converter circuit (2) according to Claim 2, in which each unit for determining a voltage differential for two successive duty cycles ($\alpha_i$, $\alpha_{i+1}$) comprises at least one first (70) and one second (72) parallel branch, each branch comprising a capacitor (C1, C2) and being able to be connected via at least one switch to the output of said energy source, the two capacitors (C1, C2) being able to be connected in parallel for load balancing and supplying a voltage differential for two successive duty cycles ($\alpha_i$, $\alpha_{i+1}$).

**4.** Converter circuit according to Claim 1, in which said analogue storage means (60) for storing information corresponding to output voltages of said electrical energy source for at least three successive duty cycles ($\alpha_{i-1}$, $\alpha_i$, $\alpha_{i+1}$) comprise a first branch (82) comprising a capacitor (C1) configured to store, via switches, output voltages of said electrical energy source for a first and a third successive duty cycle ($\alpha_{i-1}$, $\alpha_{i+1}$) and a second branch (84) comprising a capacitor (C2) configured to store, via switches, charges corresponding to the output voltage of said electrical energy source for a second duty cycle ($\alpha_i$), inserted between the first and third duty cycles ($\alpha_i$, $\alpha_{i+1}$), each branch (82, 84) being connected to a corresponding input of said analogue comparison unit, the weight of the second branch (84) being twice that of the first branch.

**5.** Converter circuit according to Claim 4, in which the first branch (82) is connected to said energy source via a divider bridge.

6. Converter circuit according to Claim 4, in which the second branch (84) comprises a switched circuit to double the load of the capacitor for the second duty cycle ($\alpha_i$).

7. Converter circuit according to any one of Claims 1 to 6, in which said analogue comparison unit (62) is an operational amplifier (68) configured as comparator.

8. Converter circuit according to any one of Claims 1 to 7, in which the regulation loop (57) is configured to determine the voltages at the output of said energy source after a predefined stabilization delay following a change of duty cycle.

9. Converter circuit according to Claims 1 to 8, in which the control unit (53) also comprises means for controlling a change of the duty cycle ($\alpha$) by a predefined quantity ($\Delta\alpha$) according to the setpoint signal of said regulation loop.

10. Converter circuit according to Claim 9, in which the control unit (53) is configured to control an increase of the duty cycle ($\alpha$) by a predefined quantity ($\Delta\alpha$) if the setpoint signal has a positive polarity.

11. Converter circuit according to Claim 9, in which the control unit (53) is configured to control an increase of the duty cycle ($\alpha$) by a predefined quantity ($\Delta\alpha$) if the setpoint signal has a negative polarity.

12. Converter circuit according to any one of Claims 1 to 11, in which the control unit (53) comprises only logic blocks.

13. Electronic system (1) comprising at least one electrical energy source (3) susceptible to significant fluctuations and at least one converter circuit (2) according to any one of Claims 1 to 12 linked to said at least one energy source (3).

14. Electronic system according to Claim 13, in which said source (3) comprises at least one element of the group formed by a photovoltaic cell, a wind turbine, a thermoelectric element.

**Patentansprüche**

1. Umsetzerschaltung (2), die dazu bestimmt ist, mit einer Quelle (3) für elektrische Energie, bei der große Schwankungen der gelieferten Leistung auftreten können, verbunden zu werden, die Folgendes umfasst:

   - eine Zerhackerschaltung (11) mit variablem Tastverhältnis ($\alpha$), die mit der Quelle (3) für elektrische Energie verbunden sein kann, und
   - wenigstens eine Ausgangsschaltung (14), die dafür ausgelegt ist, mit der Zerhackerschaltung (11) verbunden zu werden,
   - eine Schleife (57) zur Regulierung durch Suchen des Betriebspunkts für maximale Leistung der Quelle für elektrische Energie, die mit einem Ausgang der Quelle für variable Energie verbunden ist, und
   - eine Steuereinheit (53), die konfiguriert ist, im Voraus definierte Intervalle von Änderungen des Tastverhältnisses ($\alpha$) der Zerhackerschaltung (11) als Funktion eines Stellsignals der Regulierungsschleife (57) zu steuern, **dadurch gekennzeichnet, dass**
   die Regulierungsschleife (57) analoge Speichermittel (60) für Informationen, die Ausgangsspannungen der Quelle (3) für elektrische Energie für wenigstens drei aufeinander folgende Tastverhältnisse ($\alpha_{i-1}$, $\alpha_i$, $\alpha_{i+1}$) entsprechen, und eine analoge Vergleichseinheit (62), die als Funktion der analog gespeicherten Informationen am Ausgang ein Stellsignal zum Erhöhen oder Erniedrigen des Tastverhältnisses durch die Steuereinheit (53) liefert, umfasst.

2. Umsetzerschaltung (2) nach Anspruch 1, wobei die analogen Speichermittel (60) für Informationen, die Ausgangsspannungen der Quelle für elektrische Energie für wenigstens drei aufeinander folgende Tastverhältnisse ($\alpha_{i-1}$, $\alpha_i$, $\alpha_{i+1}$) entsprechen, eine erste Einheit (64) zum Bestimmen einer Spannungsdifferenz für zwei erste aufeinander folgende Tastverhältnisse ($\alpha_{i-1}$, $\alpha_i$) und eine zweite Einheit (66) zum Bestimmen einer Spannungsdifferenz für zwei zweite aufeinander folgende Tastverhältnisse ($\alpha_i$, $\alpha_{i+1}$), wovon wenigstens eines ($\alpha_{i+1}$) später als die ersten aufeinander folgenden Tastverhältnisse ($\alpha_{i-1}$, $\alpha_i$) ist, umfassen.

3. Umsetzerschaltung (2) nach Anspruch 2, wobei jede Einheit zum Bestimmen einer Spannungsdifferenz für zwei aufeinander Tastverhältnisse ($\alpha_i$, $\alpha_{i+1}$) wenigstens einen ersten (70) und einen zweiten (72) parallelen Zweig umfasst, wobei jeder Zweig einen Kondensator (C1, C2) enthält und über wenigstens einen Kommutator mit dem Ausgang der Energiequelle verbunden werden kann, wobei die zwei Kondensatoren (C1, C2) für ein Ladungsgleichgewicht parallel geschaltet sein können und eine Spannungsdifferenz für zwei aufeinander folgende Tastverhältnisse ($\alpha_i$, $\alpha_{i+1}$) liefern können.

4. Umsetzerschaltung nach Anspruch 1, wobei die analogen Speichermittel (60) für Informationen, die Ausgangsspannungen der Quelle für elektrische Energie für wenigstens drei aufeinander folgende Tastverhältnisse ($\alpha_{i-1}$, $\alpha_i$, $\alpha_{i+1}$) entsprechen, einen ersten Zweig (82), der einen Kondensator (C1) enthält, der konfiguriert ist, über Kommutatoren Ausgangsspannungen der Quelle für elektrische Energie für ein erstes und ein drittes aufeinander folgendes Tastverhältnis ($\alpha_{i-1}$, $\alpha_{i+1}$) zu speichern, und einen zweiten Zweig (84), der einen Kondensator (C2) enthält, der konfiguriert ist, über Kommutatoren Ladungen zu speichern, die der Ausgangsspannung der Quelle für elektrische Energie für ein zweites Tastverhältnis ($\alpha_i$), das zwischen das erste und das dritte Taktverhältnis ($\alpha_{i-1}$, $\alpha_{i+1}$) eingefügt ist, entsprechen, umfassen, wobei jeder Zweig (82, 84) mit einem entsprechenden Eingang der analogen Vergleichseinheit verbunden ist, wobei das Gewicht des zweiten Zweigs (84) doppelt so groß wie jenes des ersten Zweigs ist.

5. Umsetzerschaltung nach Anspruch 4, wobei der erste Zweig (82) mit der Energiequelle über eine Teilerbrücke verbunden ist.

6. Umsetzerschaltung nach Anspruch 4, wobei der zweite Zweig (84) eine Schaltung umfasst, die kommutiert wird, um die Ladung des Kondensators für das zweite Tastverhältnis ($\alpha_i$) zu verdoppeln.

7. Umsetzerschaltung nach einem der Ansprüche 1 bis 6, wobei die analoge Vergleichseinheit (62) ein Operationsverstärker (68) ist, der als Komparator konfiguriert ist.

8. Umsetzerschaltung nach einem der Ansprüche 1 bis 7, wobei die Regulierungsschleife (57) konfiguriert ist, um die Spannungen am Ausgang der Energiequelle nach einer im Voraus definierten Stabilisierungsverzögerung in der Folge einer Änderung des Tastverhältnisses zu bestimmen.

9. Umsetzerschaltung nach einem der Ansprüche 1 bis 8, wobei die Steuereinheit (53) außerdem Mittel umfasst, um eine Änderung des Tastverhältnisses ($\alpha$) um eine im Voraus definierte Größe ($\Delta\alpha$) als Funktion des Stellsignals der Regulierungsschleife zu steuern.

10. Umsetzerschaltung nach Anspruch 9, wobei die Steuereinheit (53) konfiguriert ist, eine Erhöhung des Tastverhältnisses ($\alpha$) um eine im Voraus definierte Größe ($\Delta\alpha$) zu steuern, wenn das Stellsignal eine positive Polarität hat.

11. Umsetzerschaltung nach Anspruch 9, wobei die Steuereinheit (53) konfiguriert ist, um eine Erhöhung des Tastverhältnisses ($\alpha$) um eine im Voraus definierte Größe ($\Delta\alpha$) zu erhöhen, falls das Stellsignal eine negative Polarität besitzt.

12. Umsetzerschaltung nach einem der Ansprüche 1 bis 11, wobei die Steuereinheit (53) ausschließlich Logikblöcke enthält.

13. Elektronisches System (1), das wenigstens eine Quelle (3) für elektrische Energie, bei der große Schwankungen auftreten können, und wenigstens eine Umsetzerschaltung (2) nach einem der Ansprüche 1 bis 12, die mit der wenigstens einen Energiequelle (3) verbunden ist, umfasst.

14. Elektronisches System nach Anspruch 13, wobei die Quelle (3) wenigstens ein Element aus der Gruppe umfasst, die gebildet ist durch eine photovoltaische Zelle, eine Windkraftanlage, ein thermoelektrisches Element.

**FIG. 1**

EP 2 393 192 B1

FIG. 2

**FIG. 3**

**FIG. 4**

**FIG. 5**

**FIG. 6**

**FIG. 7**

**FIG. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A simple single - sensor MPPT solution. *IEEE Transactions on Power Electronics,* Mars 2007, vol. 22 (2